# EUROPÄISCHE PATENTSCHRIFT

(11) **EP 1 551 615 B1**
(45) Veröffentlichungstag und Bekanntmachung des Hinweises auf die Patenterteilung: **23.06.2010**
(21) Anmeldenummer: 02779492.4
(22) Anmeldetag: 17.10.2002
(51) Int. Cl.: B29C 53/80

(54) **VORRICHTUNG UND VERFAHREN ZUM ABTRENNEN UND ANBINDEN VON VERBUNDFASERN**
SYSTEM FOR SEPARATING AND LINKING COMPOSITE FIBERS
SYSTEME POUR SEPARER ET LIER DES FIBRES COMPOSITES

(43) Veröffentlichungstag der Anmeldung: 13.07.2005
(73) Patentinhaber: EHA Spezialmaschinenbau GmbH, 35239 Steffenberg (DE)
(72) Erfinder: WEG, Johannes, 35685 Dillenburg (DE)
(74) Vertreter: Buchhold, Jürgen
(86) Internationale Anmeldenummer: PCT/EP2002/011588
(87) Internationale Veröffentlichungsnummer: WO 2004/035297

(56) Entgegenhaltungen:
- EP-A- 0 145 878
- DE-C- 19 811 397
- US-A1- 2001 028 015
- PATENT ABSTRACTS OF JAPAN vol. 1995, no. 06, 31. Juli 1995 (1995-07-31) & JP 07 069539 A (TORAY ENG CO LTD), 14. März 1995 (1995-03-14)

## Beschreibung

Die Erfindung betrifft ein System zum Abtrennen und Anbinden von Verbundfasern, Faserbündeln u.dgl. in einer Filament-Winding-Anlage zur Herstellung von rotationssymmetrischen Wickelkörpern mit einer Vorrichtung und einem Verfahren gemäß den Oberbegriffen von Anspruch 1 bzw. Anspruch 14.

Beim Filament-Winding-Verfahren werden Faserstränge mit einem Harz imprägniert und anschließend über einen Formträger gewickelt, der ein Dorn oder ein Grundkörper (Liner) sein kann, z.B. ein Kunststoff-Behälter. Nach dem Wickeln und Aushärten des Harzes wird der Formträger entweder aus dem Wickelkörper herausgezogen oder mit ihm zu einem Verbundkörper vereinigt. Die Wicklung erfolgt in der Regel über ein festgelegtes Muster, das mittels einer CNC-Steuerung abgearbeitet wird. Die Faserstränge bestehen allgemein aus einer Vielzahl von Filamenten, z.B. aus 1.000 bis 12.000 Feinfasern, die zu Rovings, d.h. Faserbündeln, oder zu Tapes bzw. Flachbändern mit einem Titer von 1.000 tex und mehr zusammengefasst sind.

Vor Beginn der Produktion eines Wickelkörpers bringt man einen Faserstrang an dem Dorn bzw. Grundkörper an. Nach dem Wickeln müssen die Fasern abgeschnitten und möglichst glatt an das Produkt angelegt werden. Bislang hat man die Fasern vor Fertigungsbeginn von Hand an den Dorn bzw. Liner angeklebt und nach dem Wickeln ebenfalls manuell abgeschnitten und am Wickelkörper glatt gestrichen. Das Abtrennen ist notwendig, um das fertige Wickelprodukt aus der Anlage entnehmen und ausliefern zu können. Damit man den nächsten Formträger mit einem Faserstrang (Roving oder Flachband) bewickeln kann, muss an diesem neuen Grundkörper eine Anbindung erfolgen.

Bekannt ist es zwar, einen Faserstrang nach der Produktion eines Wickelkörpers von diesem auf einen Zwischenträger in Gestalt einer benachbarten Hülse zu wickeln. Auf dieser werden die Fasern des Stranges gehalten und die Verbindungsfasern zum Dorn hin mit einem Messer durchtrennt. Nach dem Herausnehmen des fertig umwickelten Dorns und dem Einlegen eines neuen, unbewickelten Dorns werden die Fasern von der Zwischenhülse auf den Dorn gewickelt. Hierbei ist aber ungünstig, dass sich mit der herkömmlichen Abschneide- und Anbindetechnik eine vollautomatische Produktion im Filament-Winding-Verfahren nicht durchführen lässt.

Zum Wickeln von Tennisschläger-Rahmen hat man eine Portalanlage mit einer Drehmaschine verwendet, deren zentraler Spindelantrieb links und rechts davon je einen spitzengelagerten Dorn antreibt. Von je einem Spulenständer wird ein Faserstrang durch ein zugeordnetes Imprägnierbad an einen Verlegearm geführt. Ein am Portal hin und her verfahrbarer Antrieb bewegt abwechselnd den einen, dann den anderen Verlegearm, damit der betreffende Faserstrang auf den einen oder anderen Dorn gewickelt werden kann. Ist der Wickelvorgang am ersten Dorn beendet, so wird der Faserstrang entlang des Dorns in eine Parkposition nahe dem Spindelkasten gewickelt. Der gesteuerte Antrieb löst sich von dem aktuellen Verlegearm und fährt zur anderen Seite, um den zweiten Verlegearm anzutreiben. In der jeweiligen Parkstellung findet eine Anhäufung von gewickelten Roving-Enden statt, was um längere Pausen wegen der raschen Harz-Aushärtung möglichst zu vermeiden - manuelle Eingriffe erfordert, die ihrerseits keinen kontinuierlichen Betrieb zulassen. Der maschinelle Aufwand ist beträchtlich, weil alle Komponenten zweifach vorhanden sein müssen, ausgenommen lediglich den Hauptantrieb und den gemeinsamen Verlegearmantrieb.

DE-C1-198 11 397 offenbart ebenfalls eine Vorrichtung zur Belegung eines Werkstücks mit einer mit Matrixmaterial beschichteten spröden Endlosfaser. Sie weist eine entlang einer Rotationsachse angeordnete Haltevorrichtung für das Werkstück sowie eine Faserzuführvorrichtung mit einem Führungsrohr zum Führen einer Endlosfaser an das Werkstück auf, wobei zum Wickeln der Faser um das Werkstück eine Relativdrehung zwischen der Haltevorrichtung und der Faserzuführvorrichtung um die Rotationsachse vorgenommen wird. Eine Schweißvorrichtung dient zum Befestigen der Faser an einem ersten axialen Ende des Werkstückes; mit einer weiteren oder auch derselben Schweißvorrichtung wird die Faser an einem zweiten axialen Ende des Werkstückes befestigt, nachdem ein Faserabschnitt um das Werkstück gewickelt worden ist. Eine Schneidvorrichtung trennt den Faserabschnitt an dem zweiten axialen Ende nach der Verschweißung ab und eine Steuervorrichtung synchronisiert die Relativdrehung und eine axial gerichtete Vorschubbewegung der Faserzuführvorrichtung. Von Nachteil hierbei ist, dass das Werkstück lagenweise bewickelt und die Faserenden jeder Faserlage aufwendig angeschweißt werden müssen. Eine vollautomatische Produktion im Filament-Winding-Verfahren ist damit ebenfalls nicht durchführbar.

EP-A-0 145 878 beschreibt eine Vorrichtung zur Fixierung des freien Endes des Faserstrangs bei Beginn des Wickelns eines rohrförmigen Bauteils aus faserverstärktem Kunststoff auf einem in eine Wickelmaschine eingespannten Wickeldorn, wobei die Wickelmaschine eine parallel zum Wickeldorn hin und herbewegliche Führungseinrichtung für den aufzuwickelnden Faserstrang aufweist. Die Anbindung des Faserstrangs erfolgt mittels einer Büchse die koaxial zum Wickeldorn angeordnet ist und zwischen zwei Positionen axial verschieblich ausgebildet ist. Die Büchse ist ferner durch ein Getriebe entgegengesetzt zum Wickeldorn drehbar und mit einer Schneidkante versehen, um den zu verlegenden Faserstrang durchtrennen zu können. Nach dem Abtrennen des Faserstrangs muss der fertige Wickeldorn aus der Maschine herausgenommen und von Hand ein neuer eingesetzt werden, was entsprechend zeitaufwendig ist.

Um das Wickelstartende und das Wickelbeendigungsende eines Filaments an einem Dorn oder einem Garnwickelelement fixieren zu können, ohne dass Fremdstoffe wie beispielsweise ein Haftband verbleiben, schlägt US-A1-2001 029 015 folgende Verfahrensschritte vor:
- Das Garn wird mit einem Führungselement gewickelt, welches sich in axialer Richtung des Dorns oder des Garnwickelelements nach vorn und zurück bewegt, während der Dorn oder das Garnwickelelement gestützt und gedreht werden;
- Starten des Garnwickelns, wobei ein Endabschnitt des Garnes durch eine in einer relativ drehbaren Weise an einer Drehwelle vorgesehenen Haltevorrichtung gehalten wird, die sich dreht, während der Dorn und das Garnwickelelement gestützt werden;
- Aufwickeln des Garns auf dem Dorn oder dem Garnwickelelement derart, dass, selbst wenn ein sich von dem Dorn oder Garnwickelelement zu der Haltevorrichtung erstreckendes Garn abgetrennt wird, ein Endabschnitt des um den Dorn oder das Garnwickelelementes gewickelten Garnes nicht abgewickelt wird;
- Abtrennen des sich zwischen dem Dorn oder dem Garnwickelelement und der Haltevorrichtung erstreckenden Garnes mit einer Garnabtrennvorrichtung und Freigeben des Garnes durch die Haltevorrichtung, bevor das Garnwickeln beendet ist;
- Ausführen eines Endwickelns, wenn das Wickeln des Garnes um den Dorn oder das Garnwickelelement beendet ist;
- Halten des Garnes mit dem Halteabschnitt und Abtrennen des Garnes zwischen dem Dorn oder dem Garnwickelelement und der Haltevorrichtung mit der Garnabtrennvorrichtung.

Es ist ein Ziel der Erfindung, diese und weitere Nachteile des Standes der Technik zu vermeiden und ein System von wirtschaftlichem Aufbau zum Abtrennen und Anbinden von Verbundfasern, Faserbündeln u.dgl. im Filament-Winding-Verfahren zu entwickeln, das einfach zu handhaben ist und eine vollautomatische Serienproduktion ermöglicht. Angestrebt wird die Schaffung von Vorrichtungen mit wenigen Einzelkomponenten, insbesondere mit einer automatischen Trenn- und Anbindeeinrichtung für Wickelaufgaben, bei denen die verwendeten Einzelstränge mit einem Matrixmaterial getränkt sind. Ein kontinuierlicher Betrieb mit z.B. acht harzgetränkten Fasersträngen (Rovings, Bändern, Tapes) zu je 1.200 tex soll während 23 h täglich gewährleistet sein.

Hauptmerkmale der Erfindung sind in den Ansprüchen 1 und 14 angegeben. Ausgestaltungen sind Gegenstand der Ansprüche 2 bis 13 und 15 bis 26.

Eine Vorrichtung zum Abtrennen und Anbinden von Verbundfasern, Faserbündeln u.dgl. in einer Filament-Winding-Anlage zur Herstellung von rotationssymmetrischen Wickelkörpern, mit einer Zuführeinrichtung für einen mit Matrixmaterial getränkten Faserstrang zum Aufwickeln auf einen rotationssymmetrischen, rotierend angetriebenen Grundkörper und mit wenigstens einer Trenneinrichtung zum Durchtrennen des Faserstrangs und Anlegen des körperseitigen Faserstrang-Endes an einen fertig gestellten Wickelkörper zeichnet sich laut Anspruch 1 erfindungsgemäß dadurch aus, dass wenigstens eine Anbindeeinrichtung zum Anbinden des freien Faserstrang-Endes an einen benachbarten neuen, unbewickelten Grundkörper vorhanden ist.

Der Aufbau ist konstruktiv einfach und vermeidet den Doppelaufwand herkömmlicher Systeme, die wegen der Notwendigkeit, die Rovings immer an einer Spindelantriebsseite zu belassen, stets Paare von Imprägnierbädern, Spulenständern, Verlegearmen u.dgl. haben müssen. Nach der Erfindung entfällt auch ein Zwischenträger, z.B. eine Hülse, weil bei dem neuen System - das sich besonders für die Massenfertigung von Druckbehältern eignet - der Faserstrang direkt am Produkt gehalten, dort abgetrennt und mit dem entstandenen freien Ende automatisch an dem nächsten Grundkörper angebunden wird.

Man setzt die Vorrichtung generell in einer Filament-Winding-Anlage mit einer CNCgesteuerten Drehmaschine ein, die bevorzugt mehrere Spindeln aufweist und entweder in Ständer- oder in Portal-Bauweise ausgeführt ist, und mit einem Imprägnierbad für den über einen Spulenständer zugeführten Faserstrang, welcher aus Glas-, Kohle-, Polyester- oder Aramidfasern, Baumwollfasern oder Hybriden bestehen kann. Typische Imprägniermittel sind ungesättigte Polyesterharze, Polyesterimid- oder Polyimidharze, ferner Epoxid-, Silikon- und Melaminharze. Sie enthalten außerdem Additive, Füll- und Farbstoffe, Aktivatoren und Stabilisatoren. Der Grundkörper kann ein blasgeformter Kunststoffbehälter sein und das Endprodukt ein umwickelter Hohlkörper, z.B. eine Druckflasche für Flüssiggas oder auch ein transparenter Tank für Flüssigkeiten wie Heizöl, an dem der Füllstand ohne weiteres visuell erkennbar ist.

In der Ausführung gemäß Anspruch 2 hat die Trenneinrichtung wenigstens eine Schneideinrichtung, z.B. eine feststehende Klinge oder ein angetriebenes Messer, und gemäß Anspruch 3 wenigstens einen elastischen Abstreifer, beispielsweise in Form einer Gummi- oder Kunststofflippe, die man umfangsseitig über den Wickelkörper führt, vorteilhaft nach Anspruch 4 etwa rechtwinklig zur Schnittrichtung der Schneideinrichtung. Der Produktionsablauf vereinfacht und beschleunigt sich, wenn die Bewegungen von Schneideinrichtung und Abstreifer laut Anspruch 5 mit der Bewegung des Wickelkörpers synchron gekoppelt sind.

Eine wichtige Ausgestaltung des Systems sieht im Einklang mit Anspruch 6 vor, daß die Trenneinrichtung und die Anbindeeinrichtung in den Arbeitsbereich der Filament-Winding-Anlage ein- und ausschwenkbar sind. Mithin kann dieser Bereich nach Bedarf freigeräumt oder zum Umsteuern der Strangzuführung genutzt werden, und zwar auf besonders einfache Weise, wenn diese Einrichtungen laut Anspruch 7 eine Baueinheit bilden. Die Anbindeeinrichtung kann jedoch auch gemäß Anspruch 8 schwenkbar mit der Trenneinrichtung verbunden sein, wodurch man noch größere Freiheit in der Verwendung gewinnt.

Zweckmäßig weist nach Anspruch 9 die Anbindeeinrichtung wenigstens einen weiteren elastischen Abstreifer auf, beispielsweise in Form einer Gummi- oder Kunststofflippe, die umfangsseitig über den Grundkörper führbar ist, wobei Anspruch 10 vorsieht, daß die Bewegung der Anbindeeinrichtung mit der Bewegung des Grundkörpers synchron gekoppelt ist.

Eine einfache Bauform benutzt eine Anbinde- und Abschneideeinrichtung ohne Halteeinrichtung; die Fasern werden unmittelbar nach dem Abtrennen auf einem neuen unbewickelten Körper abgelegt und in Faserrichtung angedrückt. Es können aber laut Anspruch 11 unterstützend Fixiermittel vorgesehen sein, um den Faserstrang vor dem Abtrennen in Schnittposition zu halten bzw. festzulegen. Bevorzugt ist die Fixiereinrichtung gemäß Anspruch 12 in den Arbeitsbereich der Filament-Winding-Anlage ein- und ausschwenkbar, und sie kann im Einklang mit Anspruch 13 mit der Trenneinrichtung und/oder der Anbindeeinrichtung eine Baueinheit bilden.

Bei einem Verfahren zum Abtrennen und Anbinden von Verbundfasem in Filament-Winding-Technik gemäß Anspruch 14 wird wenigstens ein bevorzugt mit einem Matrixmaterial getränkter Faserstrang nach dem Umwickeln eines rotationssymmetrischen, rotierend angetriebenen Grundkörpers mittels einer Trenneinrichtung durchtrennt, worauf die abgetrennten Fasern des fertiggestellten Wickelkörpers an diesem festgelegt werden, und der verbleibende Faserstrang wird von einer Anbindeeinrichtung an einen benachbarten neuen Grundkörper übergeben und mit dem freien Faserstrang-Ende an diesen angebunden. Ein wesentlicher Vorteil der Erfindung besteht darin, daß eine herkömmlich benötigte Hülse als Hilfsmittel vollständig wegfällt. Die Rovings bzw. Tapes werden direkt am Produkt gehalten und abgeschnitten. Nach einem Wechsel des Formteils (Doms oder Liners) wird der Faden automatisch am folgenden Produkt angelegt und aufgewickelt. Der Wickelvorgang dauert an, bis die gewünschte Überdeckung des Grundkörpers durch die harzgetränkten Fasern programmgemäß erreicht ist. Die Anlage kann daher äußerst effizient betrieben werden, zumal Stillstandszeiten sich auf ein Wartungsminimum reduzieren. Das wiederum ist wegen der raschen Aushärtung des Harzes wichtig; längerer Stillstand brächte die gesamte Fertigung zum Erliegen.

Zweckmäßig wird nach Anspruch 15 das körperseitige Ende des abgetrennten Faserstrangs am fertiggestellten Wickelkörper in Faserrichtung und/oder in Wickelrichtung aufgestrichen, z.B. mit einer Rakel, einem Abstreifer o.dgl., wobei der fertiggestellte Wickelkörper laut Anspruch 16 beim Anlegen bzw. Anstreichen der abgetrennten Fasern um einen definierten Winkel in Wickelrichtung weitergedreht werden kann.

Gemäß Anspruch 17 wird der Faserstrang mit seinem freien Ende auf der Umfangsfläche des Grundkörpers angebunden, vorteilhaft indem nach Anspruch 18 das freie Ende des Faserstrangs entgegen der Wickelrichtung des Grundkörpers an diesem angelegt und indem nach Anspruch 19 der Grundkörper beim Anbinden des Faserstrangs um einen definierten Winkel entgegen der Wickelrichtung gedreht wird. Günstig ist es insbesondere, wenn der Grundkörper im Einklang mit Anspruch 20 beim Anbinden des freien Faserstrang-Endes wenigstens eine volle Windung des Faserstrangs ohne Vorspannung aufnimmt.

Wichtig ist die Ausgestaltung von Anspruch 21, wonach die Ablage des Faserstrangs auf dem Grundkörper entlang geodätischer Linien erfolgt. Da solche Linien die kürzesten Verbindungen zwischen zwei Punkten auf gekrümmten Oberflächen sind, erzielt man sparsame Bewicklung. Auch wird ein Abrutschen der Fasern vom Wickelkörper verhindert, weil alle äußeren Kräfte der Fasern senkrecht zu seiner Oberfläche wirken. Sehr einfach vollzieht sich die Anbindung des Faserstrangs laut Anspruch 22 nahe Polkappen des Grundkörpers, vor allem wenn gemäß Anspruch 23 das freie Faserstrang-Ende von der Anbindeeinrichtung auf der Achse oder Nabe des Grundkörpers fixiert wird.

Man kann eine Anbinde- und Abschneideeinrichtung ohne Halteeinrichtung verwenden, wobei die Fasern des freies Faserstrang-Endes unmittelbar nach dem Abtrennen auf einem neuen unbewickelten Körper abgelegt und in Faserrichtung angedrückt werden. Anspruch 24 sieht aber unterstützend vor, daß der Faserstrang vor dem Abtrennen von einer Fixiereinrichtung erfaßt und in Schnittposition festgelegt wird. Speziell kann laut Anspruch 25 ein Endlos-Faserstrang von einer kombinierten Abtrenn- und Anbindeeinheit unter Beibehaltung der Faserspannung erfaßt, an einem fertigen Wickelkörper durchtrennt und an einen benachbarten neuen Grundkörper angebunden werden.

Eine zyklische Verfahrensführung gibt der unabhängige Anspruch 26 mit den Schritten a) bis j) an, nach deren Beendigung mit Schritt k) ein neuer Zyklus gleicher Art beginnt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. In diesen enthaltene Beschriftungen und durch Pfeile gekennzeichnete Bewegungsrichtungen werden ausdrücklich zum Bestandteil der Beschreibung erklärt. Es zeigen:
- Fig. 1: eine stark vereinfachte, schematische Darstellung einer Filament-Winding- Anlage,
- Fig. 2: eine schematische Seitenansicht einer Trenneinrichtung einer Vorrichtung zum Abtrennen und Anbinden von Fasersträngen,
- Fig. 3: eine schematische Darstellung einer Anbindeeinrichtung einer Vorrichtung zum Abtrennen und Anbinden von Fasersträngen,
- Fig. 4: eine Stirnansicht und eine Seitenansicht der Vorrichtung zum Abtrennen und Anbinden von Fasersträngen beim Wickeln,
- Fig. 5: die Vorrichtung von Fig. 4 nach dem Wickelvorgang mit eingeschwenkter Trenneinrichtung,
- Fig. 6: eine Stirnansicht des Wickelkörpers von Fig. 5 nach dem Durchtrennen des Faserstrangs,
- Fig. 7: eine Stirnansicht des Wickelkörpers von Fig. 5 beim Anlegen bzw. Anstreichen des körperseitigen Strangendes,
- Fig.8: eine Teildraufsicht auf eine Filament-Winding-Anlage mit einer Zuführeinrichtung in zwei verschiedenen Positionen,
- Fig. 9: eine Stirnansicht eines unbewickelten Kunststoffzylinders beim Positionieren der Trenneinrichtung.
- Fig. 10: eine Stirnansicht des Kunststoffzylinders von Fig. 9 während der Übergabe des Faserstrangs von der Trenneinrichtung an die Anbindeeinrichtung,
- Fig. 11: eine Seitenansicht einer Anbindeeinrichtung und
- Fig. 12: eine Seitenansicht einer Trenneinrichtung.

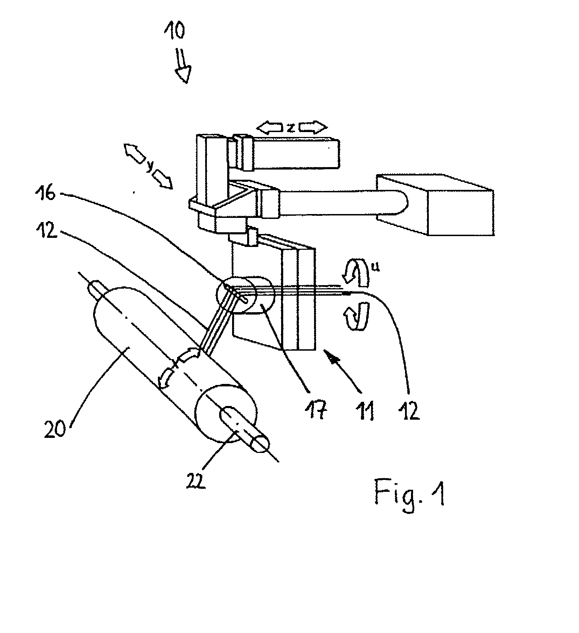

Das erfindungsgemäße System wird in einer in Fig. 1 schematisch dargestellten Filament-Winding-Anlage 10 eingesetzt, die eine CNC-gesteuerte Ein- oder Mehrspindel-Drehmaschine in Portal- oder Ständerbauweise aufweisen und Antriebe haben kann, mit denen zu bewickelnde Grundkörper 20 und eine Zuführeinrichtung 11 für einen Faserstrang 12 angetrieben werden. Die Bewegungsrichtungen der Baugruppen und Komponenten sind durch Pfeile gekennzeichnet. Die Antriebsachsen sind mit x, y, z und u bezeichnet.

Der Grundkörper 20 ist im hier beschriebenen Beispiel ein blasgeformter Kunststoffzylinder 22 mit gewölbten Enden bzw. Polkappen 24, wovon eine mit einem Einlaß oder einem Füllstutzen versehen ist.

Der Faserstrang 12 kann ein Glasfaserband sein, das z.B. aus 8 Rovings mit jeweils 1200 tex besteht. Es durchläuft ein (nicht dargestelltes) Imprägnierbad z.B. mit Tauchtränkung und gelangt anschließend harzbeladen über einen (ebenfalls nicht gezeigten) Spulenständer an den Grundkörper 20. Ein Verlegeauge 16 am Ende eines Verlegearms 17 führt das Faserband 12 CNC-gesteuert über den Grundkörper 20, wobei dessen Antriebsspindel und der Antrieb des Verlegearms 17 synchron gesteuert werden, so daß der Wickelvorgang kontrolliert abläuft.

Besonders rationell ist eine (nicht dargestellte) Kombination von zwei gleichartigen Filament-Winding-Anlagen 10, die Drehmaschinen mit zehn Spindeln haben, nämlich zwei Gruppen mit je 5 Spindeln links und rechts von einem gemeinsamen Antrieb 18. Es produzieren z.B. mit einer vorgegebenen Zykluszeit ständig jeweils die 5 Spindeln der einen Gruppe, während die andere Spindelgruppe durch Roboter entladen und neu beschickt wird. Dazu bringt ein (gleichfalls nicht dargestelltes) Fördersystem die Behälterrohlinge heran, die auf den Spindeln jeder Drehmaschine eingespannt werden.

Ist der Wickelvorgang abgeschlossen, wird der aus dem (nicht gezeigten) Imprägnierbad kommende Faserstrang 12 von dem Abtrenn- und Anbinde-System erfaßt, vom fertigen Wickelkörper 70 abgetrennt und an einem neuen Grundkörper 20 angebunden. Sensoren (nicht dargestellt) erfassen den Wickelzustand, so daß am Ende eines Wickelvorgangs ein Signal zum Trennen des Faserstrangs 12 und, nachdem dies vollzogen ist, ein zweites Signal zum Beginn des Anbindens am nächsten Grundkörper 20 gegeben wird. Nach der Entnahme wird der fertige Wickelkörper 70 in einem (nicht gezeichneten) Trockenofen ausgehärtet.

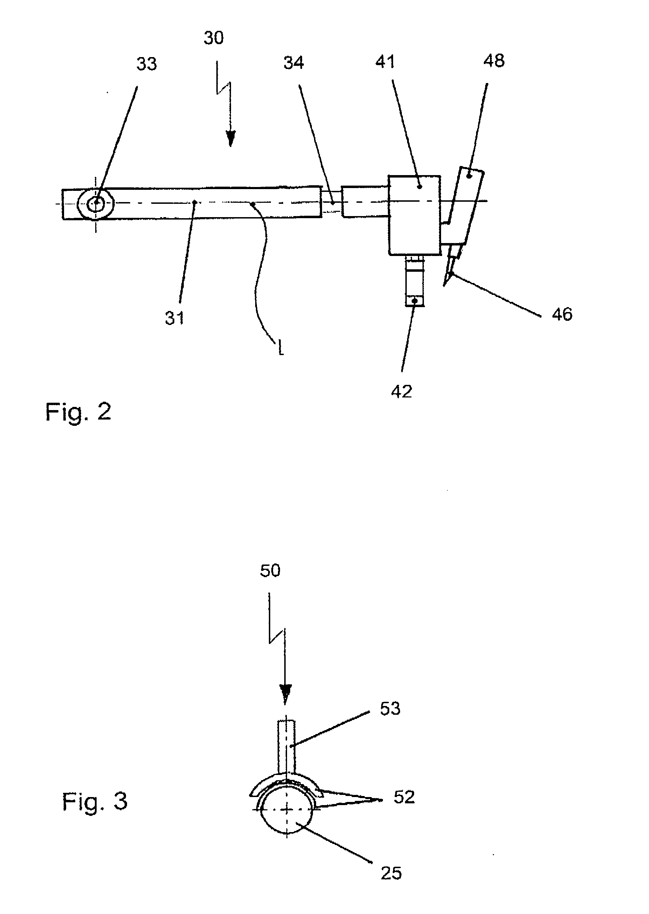

Für das Abtrennen der Rovings 12 vom fertigen Wickelkörper 70 ist eine Trenneinrichtung 30 vorgesehen (siehe Fig. 2), die den gesamten Faserstrang 12 mittels einer Greif- bzw. Fixiereinrichtung 40 ergreifen und in festgeklemmter Position mittels einer Schneideinrichtung 45 durchtrennen kann. Die Greif- bzw. Fixiereinrichtung 40 hat hierzu einen pneumatisch betriebenen Zylinder 41 als Antrieb für zwei Greifbacken 42, zwischen denen die Rovings fixierbar sind. Die erzeugte Klemmkraft zwischen den Greifbacken 42 ist derart bemessen, daß das Zuggewicht der Rovings 12 von bis zu 30 kg von dem System problemlos aufgenommen wird. Die Schneideinrichtung 45 besitzt ein Messer 46, das zum Durchtrennen der Rovings 12 von einem ebenfalls pneumatisch betriebenen Stellzylinder 48 linear antreibbar ist.

Die gesamte Trenneinrichtung 30 ist mit einem Tragarm 31 oder Tragrahmen an der Zuführeinrichtung 11 der Filament-Winding-Anlage 10 festgelegt, an dem endseitig die Greifeinrichtung 40 und die Schneideinrichtung 45 montiert sind. Ein Basisgelenk 33 vor der Zuführeinrichtung 11 ermöglicht das Verschwenken der Trenneinrichtung in einer Ebene senkrecht zur Antriebswelle 22 des Grundkörpers 20, während ein Kopfgelenk 34 das Verschwenken der Greifeinrichtung 40 und der Schneideinrichtung 45 um die Längsachse L des Tragarms 31 vorsieht.

Das Anbinden des abgetrennten Faserstrangs 12 an einen neuen Grundkörper 20 erfolgt mittels einer Anbindeeinrichtung 50, die in Fig. 3 stark vereinfacht dargestellt ist. Sie sitzt berührungslos über der Antriebswelle 25 des Grundkörpers 20 in unmittelbarer Nähe zu einer Polkappe 24 des Kunststoffzylinders 22 und hat zwei gewölbte Klemmbacken 52 zum Greifen und Festlegen des Faserstrangs 12. Das Öffnen und Schließen der Klemmbacken 52 erfolgt über einen Hebel 53, der mit einem (hier nicht dargestellten) pneumatischen Stellzylinder 54 in Wirkverbindung steht.

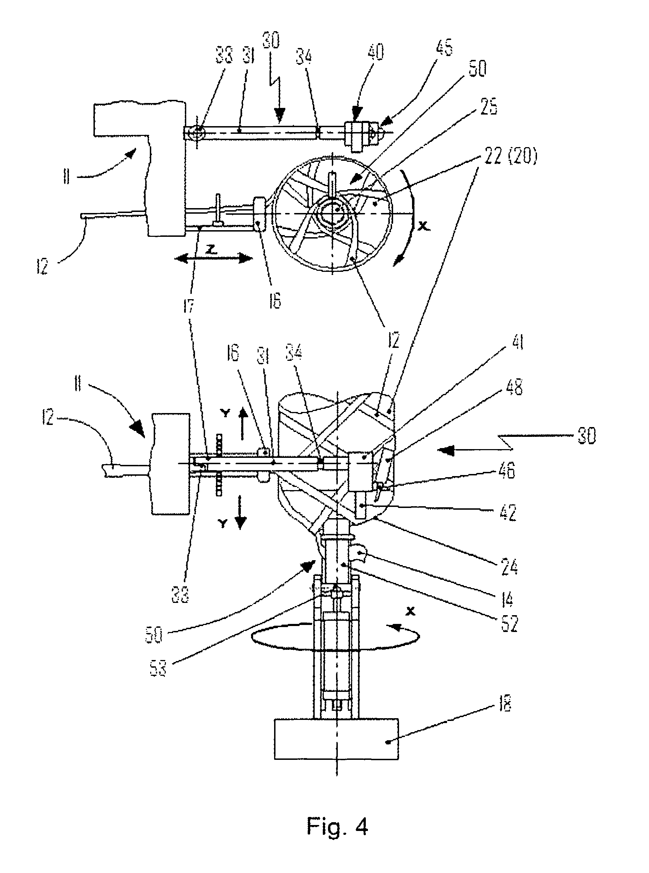

Fig. 4 zeigt die Vorrichtung zum Abtrennen und Anbinden von Fasersträngen 12 mit seinen Systemkomponenten, nämlich der Trenneinrichtung 30 und der Anbindeeinrichtung 50. Beide liegen in den Positionen, die sie während des Wickelvorgangs einnehmen. Die Trenneinrichtung 30 wird von der Zuführeinrichtung 11 oberhalb des Kunststoffzylinders 22 geführt, während die Anbindeeinrichtung 50 vor der Polkappe 24 positioniert ist.

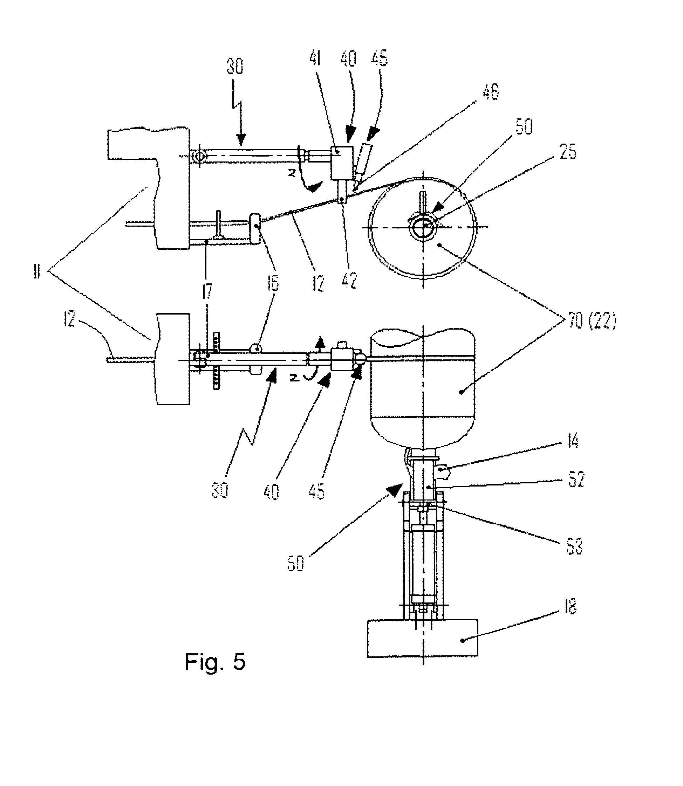

Der Wickelvorgang dauert z.B. etwa 8 min. Er endet mit einigen Radialwindungen, die unter kleinem Vorschub gefahren werden, wobei der Faserstrang 12 in einem Winkel von 90° zur Wickeldornachse 25 aufläuft, und zwar bevorzugt in der Längsmitte des Kunststoffzylinders 22 bzw. des fertigen Wickelkörpers 70 (siehe Fig. 5).

Um den fertigen Wickelkörper 70 vom Faserstrang 12 zu trennen, fährt die Zuführeinrichtung 11 mitsamt der Trenneinrichtung 30 entlang der z-Achse ein Stück weit zurück, bis die Greifeinrichtung 40 und die Schneideinrichtung 45 seitlich neben dem Wickelkörper 70 liegen. Von dort aus werden beide über das Kopfgelenk 34 um etwa 90° eingeschwenkt und in Arbeitsposition gebracht, wobei der Greifer 40 den Faserstrang 12 mit geöffneten Greifbacken 42 berührungsfrei übergreift, um Beschädigungen der Filamente und ungewolltes Abstreifen von Harz zu vermeiden.

Man erkennt, daß der Strang 12 - von oben betrachtet - ein geradlinig verlaufendes Band von z.B. 3,5 cm Breite ist, das durch Schließen der Greifbacken 42 gefaßt und von der Greifeinrichtung 40 in dieser Lage kraftschlüssig gehalten wird. Letztere bildet mithin zugleich eine Fixiereinrichtung für den Faserstrang 12, der nun im nächsten Schritt von der Schneideinrichtung 45 durchtrennt werden kann. Hierbei wird die hohe Zugspannung der Rovings 12 von der Greifeinrichtung 40 und damit von der Trenneinrichtung 30 aufgefangen.

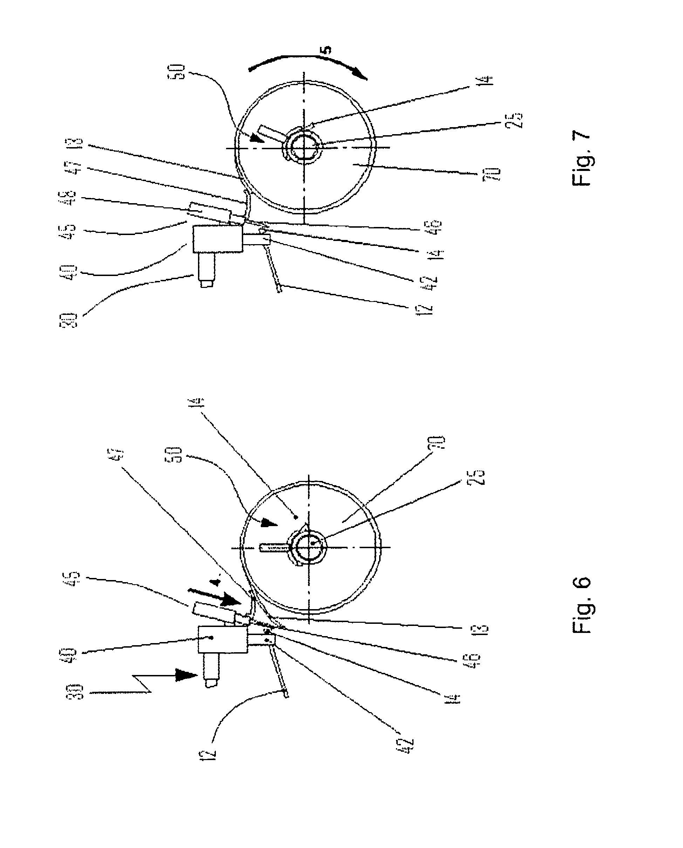

Die Schneidphase zeigt Fig. 6. Das Messer 46 fährt in den Faserstrang 12 ein und und durchtrennt hierbei die einzelnen Rovings. Es entsteht ein körperseitiges Strangende 13, während der übrige Faserstrang 12 weiterhin fest von der Greifeinrichtung 40 fixiert wird. Beim Einfahren des Messers 46 wird das körperseitige Strangende 13 - wie in Fig. 7 zu sehen - von einem elastischen Abstreifer flach an den Wickelkörper 70 angelegt. Der Abstreifer 47 ist vorzugsweise eine Gummi- oder Kunststofflippe, die an einem (nicht näher bezeichneten) Messerbalken befestigt ist. Dieser wird nach dem Trennvorgang mit dem Messer 46 für kurze Zeit in unterer Position gehalten, während der Spindelantrieb (x-Achse) den Wickelkörper 22 bzw. 70 noch z.B. 2 Umdrehungen weiterdreht, wodurch das Ende 13 glatt festgelegt wird. Anschließend fährt das Messer 46 wieder in seine Ausgangsstellung zurück.

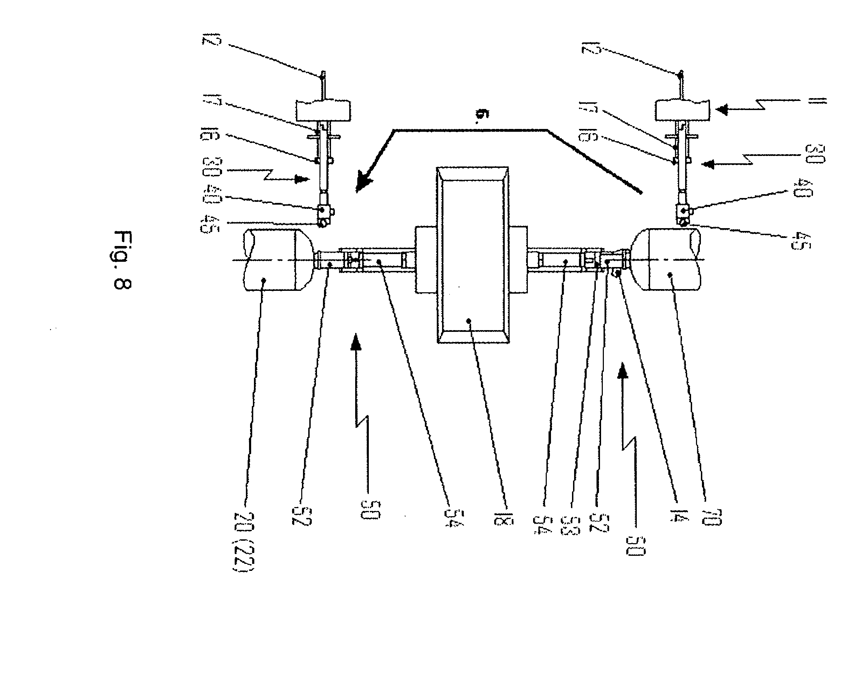

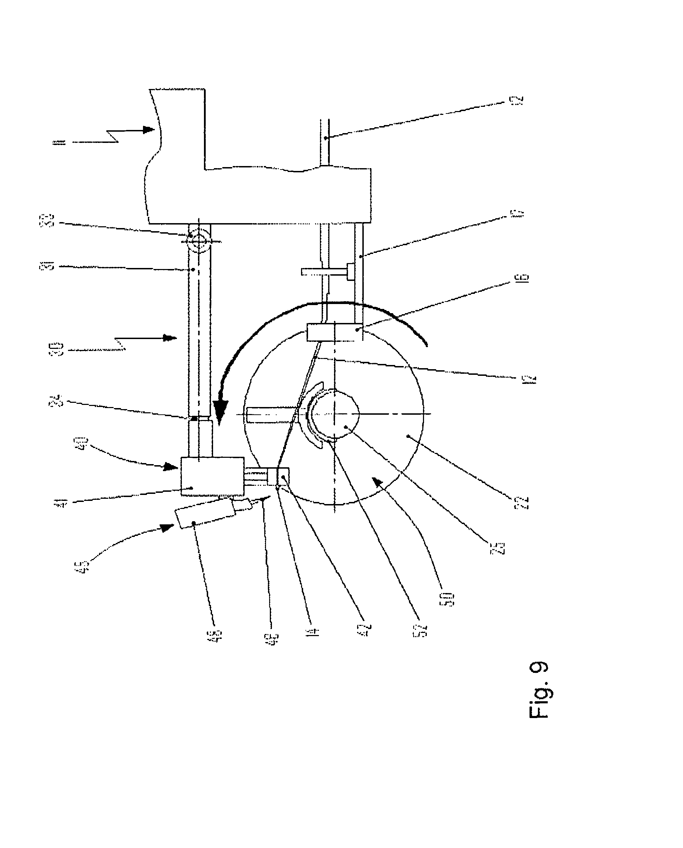

Zur Entnahme des jetzt fertigen Wickelkörpers 70 wird im folgenden Arbeitsschritt eine Querbewegung des Faserstrangs 12 ausgeführt, d.h. in y-Richtung (siehe Fig. 8). Dabei wird der Verlegearm 17 samt Verlegeauge 16 und Trenneinrichtung 30 von der einen zur anderen Seite der Filament-Winding-Anlage 10 bzw. ihres Antriebsständers verfahren, wo sich bereits ein neuer Kunststoffzylinder 22 befindet. Das weiterhin von der Trenneinrichtung 30 gehaltene freie Strangende 14 des abgetrennten Faserstrangs 12 wird hier von der Zuführeinrichtung 11 zunächst über der noch geschlossenen Anbindeeinrichtung 50 positioniert (siehe Fig. 9).

Nach dem Öffnen der Klemmbacken 52 über den Stellzylinder 54 wird der Faserstrang 12 von der Zuführeinrichtung 11 und der Trenneinrichtung 30 in die Anbindeeinrichtung 50 eingebracht, ohne daß hierbei eine Berührung stattfindet. Anschließend werden die Klemmbacken 52 geschlossen, wobei das Strangende 14 von der Anbindeeinrichtung 50 kraftschlüssig fixiert wird.

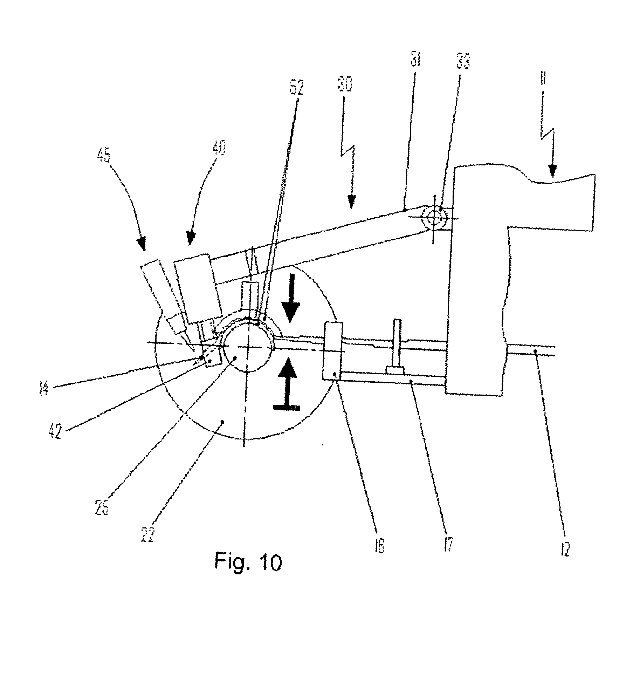

Damit nicht durch sofortiges Schließen der Backen 52 ein unerwünschtes Nachschleppen des anzubindenen Endes 14 erfolgt, wird die Trenneinrichtung - wie in Fig. 10 gezeigt - über das in dem Tragarm 31 integrierte Gelenk 33 nach unten geneigt, wodurch das Strangende 14 kurz bleibt.

Liegt das Strangende 14 in den Klemmbacken 52 fest, öffnen sich die Greifbacken 42 der Greifeinrichtung 40 und geben den Faserstrang 12 frei. Anschließend wird die Trenneinrichtung 30 über die Gelenke 33 und 34 aus dem Arbeitsbereich heraus in seine Ausgangsposition zurückgeschwenkt (siehe Fig. 4).

Das System ist nun in der Ausgangsposition für den Start eines neuen Wickelvorgangs. In dessen Anlauf rotiert die Wickel- bzw. x-Achse synchron mit der Zuführeinrichtung 11, die das Verlegeauge 16 und die Trenneinrichtung 30 in y- und z-Richtung verbringt. Zwar sperren die verlegten Rovings 12 anfänglich vom Verlegeauge 16 her zur Tangente der Polkappe 24, doch bindet der Faserstrang 12 nach wenigen Umdrehungen des Kunststoffzylinder 22 dieses Strangdreieck ab (siehe Fig. 4 unten). Dann reicht auch die Haftreibung des Anfangswickels, um die Klemmbacken 52 der Anbindeeinrichtung 50 entlasten zu können, wodurch das Bewickeln völlig frei vor sich geht.

Während der neue Kunststoffzylinder 22 bewickelt wird, kann auf der anderen Seite der Filament-Winding-Anlage 10 der bereits fertige Wickelkörper 70 entnommen und durch einen neuen Grundkörper 20 ausgetauscht werden.

Man erkennt, daß die Vorrichtung zum Abtrennen und Anbinden von Verbundfasern, Faserbündeln u.dgl. zweckmäßig folgende Baugruppen vorsieht:
- B1: "Trennen" mit den Funktionen "Faserstrang fixieren" durch "Greifen und Klemmen", ferner "Faserstrang trennen" und "Faserstrang transportieren";
- B2: "Anbinden" durch "Faserstrang übergeben" und "Faserstrang anbinden";
- B3: "Antriebe" für die vorgenannten Baugruppen; und
- B4: "Kinematik" für die Abläufe der Baugruppen 1) und 2).

Zum Abtrennen von Fasersträngen 12, beispielsweise bis zu acht Rovings mit jeweils bis zu 2.400 tex, benötigt man Trenngeräte 45 hoher Standzeit von mindestens 23 h und geringer Bauhöhe, insbesondere unter 200 mm. Bevorzugt verwendet man daher als Messer 46 Scherbalken, die aneinander vorbeigleiten, eine auf eine Gegenlage drückende Klinge oder 2 in einem spitzen Winkel zueinander angeordnete Schneidklingen, welche die Rovings in einer von dem Antriebszylinder 42 erzeugten Relativbewegung durchtrennen, wobei der Faserstrang 12 automatisch zentriert wird. Alternativ kann jedoch auch ein rotierendes Skalpell verwendet werden. Oder man durchtrennt die Faserstränge 12 durch Sägen.

Für das Fixieren in den Baugruppen B1 und B2 können ebenfalls verschiedene Greif- und Klemmanordnungen gewählt werden. Für die Greifeinrichtung 40 der Trenneinrichtung 30 verwendet man bevorzugt einen pneumatischen Parallelgreifer oder zwei parallele aufeinander preßbare Flächenbacken. Die Anbindeeinrichtung 50 weist bevorzugt zwei aufeinander preßbare Halbschalen auf. Wichtig hierbei sind Auswahlkriterien wie Bauvolumen bzw. Platzbedarf und Funkionssicherheit, wobei allerdings auch der Preis eine bedeutsame Rolle spielt. Selbsthemmende Fixiermittel können daher auch in Betracht kommen.

Die Wirksamkeit von Greif- und Klemmeinrichtungen wird maßgeblich durch ihre Oberflächen-Beschaffenheit bestimmt, wobei es auf Form bzw. Geometrie und auf Rauhigkeit bzw. Griffigkeit der Greif- bzw. Klemmbacken ankommt. Die Greifbacken 42 der Greifeinrichtung 40 sind daher vorzugsweise rechteckig und eben ausgebildet mit glatten Greifbackenoberflächen, was den Vorteil einfacher Herstellung hat. Eine Abwandlung kann darin bestehen, daß die Backen keil- oder dachförmig gestaltet sind. Oder man versieht die Oberflächen mit genopptem Gummi bzw. Moosgummi. Die Anbindeeinheit verwendet gewölbte, insbesondere halbrunde Backen. Von Vorteil kann auch die Werkstoffpaarung Teflon/Metall sein, wobei die harzführenden Bereiche Zackennuten haben können. Um die Rovings 12 schonend packen zu können, verwendet man gerändelte Backen aus Metall und/oder Teflon.

Für die Lagerung der bewegten Teile eignen sich übliche Wälz- und Gleitlager, am besten fettlos und ohne Dichtungen. Es sollte verhindert werden, daß bei der Reinigung der Filament-Winding-Anlagen mit Azeton gelöstes Harz etwa unter Dichtungen kriechend eindringt. Offene Lager lassen sich daher gut ausspülen.

Bezüglich der Baugruppe B3 sind in Filament-Winding-Anlagen allgemein elektrische und/oder pneumatische Antriebe vorhanden, so daß auch für das erfindungsgemäße System solche Antriebe wegen ihrer Wirtschaftlichkeit und Zuverlässigkeit vorgesehen sind.

Eine Anforderung an den kinematischen Aufbau (Gruppe B4) ist, daß sich das Trenn-/Anbinde-System 30, 50 während der Strangverlegung nicht im Durchmesser des Wickelkerns befindet, aber an die Dornachse 25 heranbringen läßt. Mihin befindet sich die neigbare Trenneinrichtung 30 stets hinter dem Dorn. Denkbar ist aber auch, daß eine (nicht dargestellte) zentrale Steuerstange die Trenneinrichtung 30 und/oder die Anbindeeinrichtung 50 auf und ab bewegt. Letztere wird jedoch bevorzugt direkt an der Polkappe 24 des Dorns bzw. des Wickelkörpers 20 liegen oder ihn zentrisch umkreisen.

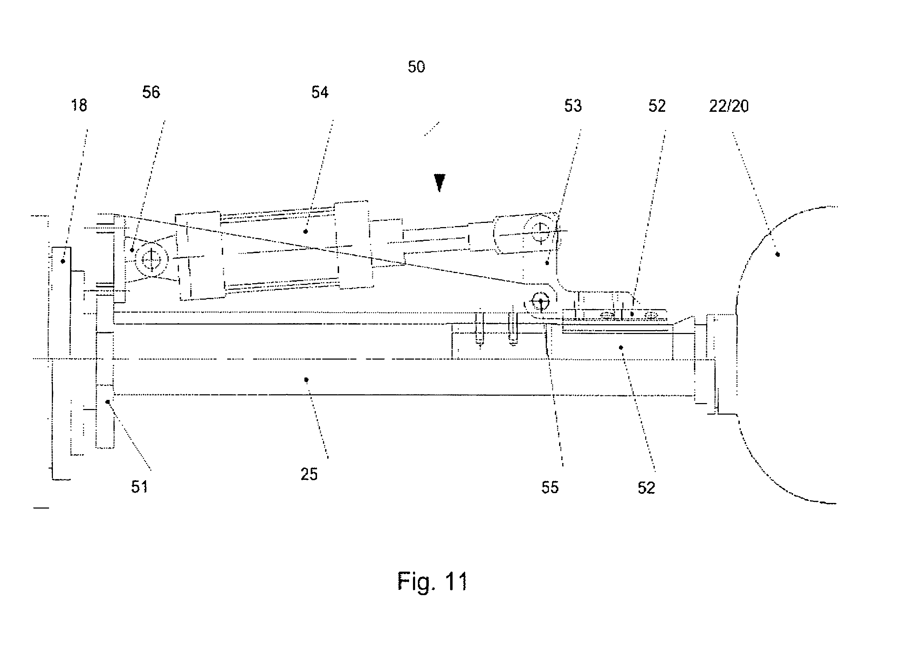

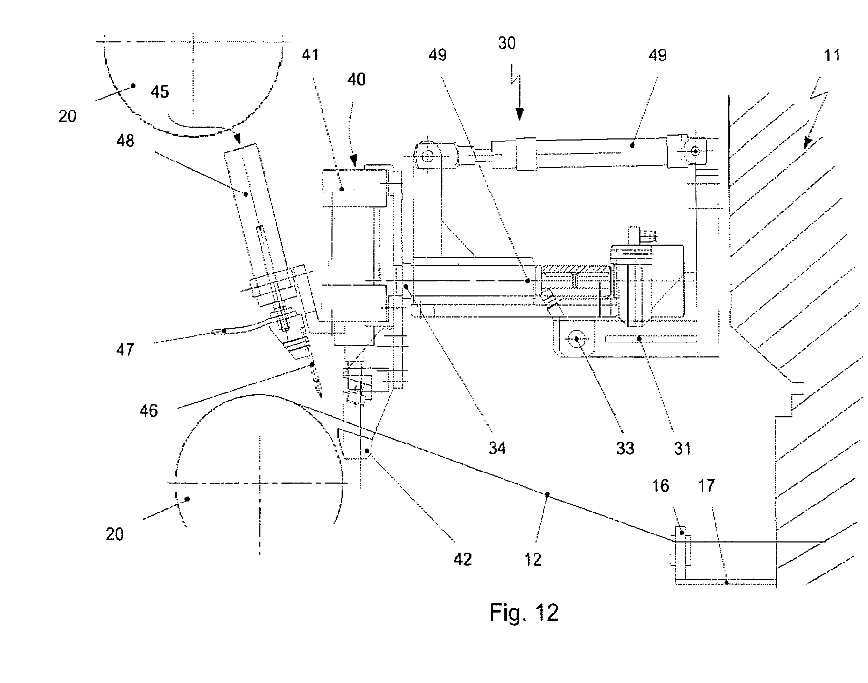

Eine andere Ausführungform der Erfindung geht aus Fig. 11 und 12 hervor. Die Anbindeeinrichtung 50 ist mittels einer Grundplatte 51 am Spannfutter einer (nicht näher gezeichneten) Drehmaschine befestigt. Die obere Klemmbacke 52 wird über einen in einer Achse 55 gelagerten Winkelhebel 53 von dem pneumatischen Zylinder 54 bewegt, der ebenfalls um einer Achse 56 schwenkbar gelagert ist, um Ausgleichsbewegungen ausführen zu können. Die untere Klemmbacke 52 ist starr ausgebildet.

Die Trenneinrichtung 30 ist in Seitenansicht in der Position vor dem Schnitt gezeichnet. Die Bewegungen der Greifeinrichtung 40 und der Schneideinrichtung 45 um die Schwenkachse 33 und die Drechachse 34 werden über pneumatische Antriebe 49 ausgeführt, die über (nicht sichtbare) Magnetventile mit der anlagenseitigen Druckluftversorgung in Verbindung stehen.

Die Erprobung des erfindungsgemäßen Systems ergab, daß die Greifmechanismen 40, 50 jeweils alle Rovings sicher erfaßten. Nur bei trockenem, noch ungetränktem Faserstrang 12 zogen sich einzelne Filamente unter hoher Zugspannung aus dem Greifer heraus, wogegen der imprägnierte Faserstrang 12 alle Filamente zusammenhielt. Weder beim Klemmen noch beim Schneiden der Rovings trat eine Verschmutzung durch Harzaustritt auf, und alle Schneidvorgänge erfolgten mit zuverlässigem, sauberem Schnitt. Beim Einschwenken der Trenneinrichtung 30 ging der Faserstrang 12 stets frei, d.h. er wurde nicht berührt. Seine Übergabe von der Trenn- an die Anbindeeinrichtung (also von 30 an 50) erfolgte absolut problemlos, so daß auch der neue Wickelvorgang selbst bei einer Verlege-Geschwindigkeit von 60 m/min einwandfrei verlief.

Eine noch andere Ausführungsform der Erfindung umfaßt folgende Verfahrensschritte:
a) Nach Fertigstellung eines zu wickelnden Produkts wird an der Filament-Winding-Anlage eine Abtrenn- und Anbindeeinheit in Arbeitsposition gebracht, z.B. eingeschwenkt, bei der die Trenneinrichtung 30 und die Anbindeeinrichtung 50 miteinander kombiniert worden sind. Daher besitzt diese Abtrenn- und Anbindeeinheit keine an den Polkappen 24 angeordnete Klemmbacken 52 mehr, sondern nur noch eine Greifeinrichtung 40 mit Greifbacken 42;
b) von dem fertigen Wickelprodukt ausgehende Fasern werden mittels der Greifeinrichtung erfaßt und festgeklemmt, ohne daß die Fasern des Faserstrangs ihre Vorspannung verlieren;
c) eine feststehende Klinge oder ein angetriebenes Messer durchtrennt die Fasern zwischen dem Produkt und der Greifeinrichtung;
d) die durchtrennten, vom Produkt abstehenden Fasern werden mit einem Abstreifer glatt an das Produkt angelegt, insbesondere an- bzw. aufgestrichen;
e) das fertige Produkt wird entnommen und die Trenneinrichtung wird zu einem benachbarten neuen Grundkörper bewegt, wobei der Faserstrang vor seinem freien Ende in der Greifeinrichtung eingespannt bleibt, so daß der Produktionsprozeß ohne Unterbrechungen oder Eingriffe von Hand weitergeführt werden kann;
f) eventuell am Abstreifer der Abtrenn- und Anbindeeinheit befindliche Harzreste werden auf der Oberfläche eines neuen unbewickelten Grundkörpers (z.B. auf einem Kunststoffbehälter) abgestrichen;
g) der von der Greifeinrichtung gehaltene Faserstrang wird in das Harz auf der Oberfläche des neuen Grundkörpers eingelegt;
h) durch synchronisiertes Öffnen der Greifeinrichtung und definiertes Rückwärtsdrehen des neuen Grundkörpers um einen vorgegebenen Winkel wird das freie Faserstrang-Ende auf der Oberfläche des neuen Grundkörpers festgelegt, bevorzugt mittels eines weiteren Abstreifers, z.B. einer in Faserrichtung über das freie Faserstrang-Ende streichenden Lippe;
i) nach erfolgter Drehrichtungsänderung wird das freie Faserstrang-Ende ohne Fadenspannung wenigstens einmal in Wickelrichtung um den Grundkörper gelegt, was durch eine über die Oberfläche samt Fasern streichende Lippe unterstützt werden kann;
j) nach der Anfangsbefestigung wird die Abtrenn- und Anbindeeinheit aus dem Anwendungsbereich herausgeschwenkt, damit der eigentliche Wickelvorgang beginnen kann;
k) Nach dessen Beendigung beginnt der nächste Zyklus mit Verfahrensschritt a).

Man erkennt, daß in einer Filament-Winding-Anlage 10 ein getränkter Faserstrang 12 auf einen rotierend angetriebenen Grundkörper 20 aufgewickelt wird. Eine Trenneinrichtung 30 dient zum Durchtrennen und Anlegen des Faserstrang-Endes 13 an einen fertigen Wickelkörper 70. Mit einer Anbindeeinrichtung 50 wird das freie Faserstrang-Ende 14 an einem nächsten Grundkörper 20 übergeben, bevorzugt in der Nähe der Polkappen 24. Einem Messer 46 einer Schneideinrichtung 45 ist ein elastischer Abstreifer 47 zugeordnet, der umfangsseitig etwa rechtwinklig zur Schnittrichtung über den Wickelkörper 70 führbar ist. Die Trenneinrichtung 30 ist in den Arbeitsbereich der Filament-Winding-Anlage ein- und ausschwenkbar, ggf. als Baueinheit mit der Anbindeeinrichtung 50. Die Bewegung des Wickelkörpers 70 ist mit der Trenneinrichtung 30 synchron gekoppelt. In Schnittposition ist der Faserstrang 12 mit einer Greifeinrichtung 40 fixierbar, die bevorzugt gemeinsam mit der Schneideinrichtung 45 in den Arbeitsbereich der Filament-Winding-Anlage ein- und ausgeschwenkbar ist.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- L: Längsachse

- 10: Filament-Winding-Anlage
- 11: Zuführeinrichtung
- 12: Faserstrang
- 13: körperseitiges Strangende
- 14: freies Strangende
- 16: Verlegeauge
- 17: Verlegearm
- 18: Wickelantrieb

- 20: Grundkörper / Wickelkörper
- 22: Kunststoffzylinder
- 24: Polkappe
- 25: Antriebswelle

- 30: Trenneinrichtung
- 31: Tragarm
- 33: Basisgelenk
- 34: Kopfgelenk

- 40: Greifeinrichtung
- 41: Zylinder
- 42: Greifbacke
- 45: Schneideinrichtung
- 46: Messer
- 47: Abstreifer
- 48: Zylinder
- 49: Druckzylinder

- 50: Anbindeeinrichtung
- 51: Grundplatte
- 52: Klemmbacken
- 53: Hebel
- 54: Stellzylinder
- 55: Achse
- 56: Achse

- 70: Wickelkörper

## Patentansprüche

1. Vorrichtung zum Abtrennen und Anbinden von Verbundfasern, Faserbündeln u.dgl. in einer Filament-Winding-Anlage (10) zur Herstellung von rotationssymmetrischen Wickelkörpern (70),
- mit einer Zuführeinrichtung (11) für einen mit Matrixmaterial getränkten Faserstrang (12), der auf einen rotierend angetriebenen Grundkörper (20) aufgewickelt wird, und
- mit wenigstens einer Trenneinrichtung (30) zum Durchtrennen des Faserstrangs (12) und Anlegen seines körperseitigen Strang-Endes (13) an den fertig gestellten Wickelkörper (70),
**dadurch gekennzeichnet, dass** wenigstens eine Anbindeeinrichtung (50) zum Anbinden des freien Faserstrang-Endes (14) an einen benachbarten neuen, unbewickelten Grundkörper (20) vorhanden ist.

2. Vorrichtung nach Anspruch 1, **dadurch gekennzeichnet, dass** die Trenneinrichtung (30) wenigstens eine Schneideinrichtung (45) aufweist.

3. Vorrichtung nach Anspruch 1 oder 2, **dadurch gekennzeichnet, dass** die Trenneinrichtung (30) wenigstens einen elastischen Abstreifer (47) aufweist, beispielsweise in Form einer Gummi- oder Kunststofflippe, die umfangsseitig über den Wickelkörper (20) führbar ist.

4. Vorrichtung nach Anspruch 2 oder 3, **dadurch gekennzeichnet, dass** der Abstreifer (47) etwa rechtwinklig zur Schnittrichtung der Schneideinrichtung (45) angeordnet ist.

5. Vorrichtung nach einem der Ansprüche 2 bis 4, **dadurch gekennzeichnet, dass** die Bewegung von Schneideinrichtung (45) und Abstreifer (47) mit der Bewegung des Wickelkörpers (20) synchron gekoppelt ist.

6. Vorrichtung nach einem der Ansprüche 1 bis 5, **dadurch gekennzeichnet, dass** die Trenneinrichtung (30) und die Anbindeeinrichtung (50) in den Arbeitsbereich der Filament-Winding-Anlage ein- und ausschwenkbar sind.

7. Vorrichtung nach einem der Ansprüche 1 bis 6, **dadurch gekennzeichnet, dass** die Trenn- und Anbindeeinrichtung (30, 50) eine Baueinheit bilden.

8. Vorrichtung nach einem der Ansprüche 1 bis 6, **dadurch gekennzeichnet, dass** die Anbindeeinrichtung (50) schwenkbar mit der Trenneinrichtung (30) verbunden ist.

9. Vorrichtung nach Anspruch 7 oder 8, **dadurch gekennzeichnet, dass** die Anbindeeinrichtung (50) wenigstens einen weiteren elastischen Abstreifer aufweist, beispielsweise in Form einer Gummi- oder Kunststofflippe, die umfangsseitig über den Wickelkörper (20) führbar ist.

10. Vorrichtung nach Anspruch 9, **dadurch gekennzeichnet, dass** die Bewegung des weiteren Abstreifers mit der Bewegung des Wickelkörpers (20) synchron gekoppelt ist.

11. Vorrichtung nach einem der Ansprüche 1 bis 10, **dadurch gekennzeichnet, dass** eine Greifeinrichtung (40) vorgesehen ist, mit welcher der Faserstrang (12) vor dem Abtrennen fixierbar ist.

12. Vorrichtung nach Anspruch 11, **dadurch gekennzeichnet, dass** die Greifeinrichtung (40) in den Arbeitsbereich der Filament-Winding-Anlage (10) ein- und ausschwenkbar ist.

13. Vorrichtung nach einem der Ansprüche 1 bis 12, **dadurch gekennzeichnet, dass** die Fixiereinrichtung (40) mit der Trenneinrichtung (30) und/oder der Anbindeeinrichtung (50) eine Baueinheit bildet.

14. Verfahren zum Abtrennen und Anbinden von Verbundfasern, Faserbündeln u.dgl. in einer Filament-Winding-Anlage (10), wobei wenigstens ein getränkter Faserstrang (12) nach dem Umwickeln eines rotierend angetriebenen Grundkörpers (20) mittels einer Trenneinrichtung (30) durchtrennt wird, wobei die abgetrennten Fasern (13) des fertig gestellten Wickelkörpers (70) an diesem festgelegt werden und wobei der Faserstrang (12) an einen benachbarten neuen Grundkörper (20) übergeben und mit dem freien Faserstrang-Ende (14) an diesen angebunden wird.

15. Verfahren nach Anspruch 14, **dadurch gekennzeichnet, dass** das körperseitige Ende (13) des abgetrennten Faserstrangs (12) am fertig gestellten Wickelkörper (70) in Faserrichtung und/oder in Wickelrichtung aufgestrichen wird.

16. Verfahren nach Anspruch 14 oder 15, **dadurch gekennzeichnet, dass** der fertige Wickelkörper (70) beim Anlegen bzw. Anstreichen der abgetrennten Fasern um einen definierten Winkel in Wickelrichtung weitergedreht wird.

17. Verfahren nach einem der Ansprüche 14 bis 16, **dadurch gekennzeichnet, dass** der Faserstrang (12) auf der Umfangsfläche des Grundkörpers (20) angebunden wird.

18. Verfahren nach einem der Ansprüche 14 bis 17, **dadurch gekennzeichnet, dass** der Faserstrang (12) entgegen der Wickelrichtung des Grundkörpers (20) an diesem angelegt wird.

19. Verfahren nach Anspruch 17 oder 18. **dadurch gekennzeichnet, dass** der Grundkörper (20) beim Anbinden des Faserstrangs (12) um einen definierten Winkel entgegen der Wickelrichtung gedreht wird.

20. Verfahren nach einem der Ansprüche 14 bis 19, **dadurch gekennzeichnet, dass** der Grundkörper (20) nach dem Anbinden des Faserstrangs (12) wenigstens eine volle Windung des Faserstrangs (12) ohne Vorspannung aufnimmt.

21. Verfahren nach einem der Ansprüche 14 bis 20, **dadurch gekennzeichnet, dass** die Ablage des Faserstrangs (12) auf dem Grundkörper (20) entlang geodätischer Linien erfolgt.

22. Verfahren nach einem der Ansprüche 14 bis 21, **dadurch gekennzeichnet, dass** der Faserstrang (12) nahe Polkappen (24) des Grundkörpers (20) angebunden wird.

23. Verfahren nach Anspruch 22, **dadurch gekennzeichnet, dass** das freie Ende (14) des Faserstrangs in der Anbindeeinrichtung (50) fixiert wird.

24. Verfahren nach einem der Ansprüche 14 bis 23, **dadurch gekennzeichnet, dass** der Faserstrang (12) vor dem Abtrennen von einer Fixiereinrichtung (40) erfasst und in Schnittposition festgelegt wird.

25. Verfahren nach einem der Ansprüche 14 bis 24, **dadurch gekennzeichnet, dass** ein Endlos-Faserstrang (12) von einer kombinierten Abtrenn- und Anbindeeinheit (30, 40, 50) unter Beibehaltung der Faserspannung erfasst, an einem fertigen Wickelkörper (70) durchtrennt und an einen benachbarten neuen Grundkörper (20) angebunden wird.

26. Verfahren zum Abtrennen und Anbinden von Verbundfasern, Faserbündeln u.dgl. in einer Filament-Winding-Anlage (10), nach einem der Ansprüche 14 bis 25, **gekennzeichnet durch** folgende Verfahrensschritte:
a) Nach Fertigstellung eines Wickelprodukts (70) wird eine Abtrenn- und Anbindeeinheit (30, 40) in Arbeitsposition gebracht, z.B. eingeschwenkt;
b) von dem fertigen Wickelprodukt (70) ausgehende Fasern werden mittels einer Halteeinrichtung (40) erfasst und festgeklemmt, ohne dass die Fasern des Faserstrangs (12) ihre Vorspannung verlieren;
c) eine feststehende Klinge oder ein angetriebenes Messer (46) durchtrennt die Fasern zwischen dem Wickelprodukt (70) und der Halteeinrichtung (40);
d) die durchtrennten, vom Wickelprodukt (70) abstehenden Fasern werden mit einem Abstreifer (47) glatt an das Produkt (70) angelegt, insbesondere an- bzw. aufgestrichen;
e) das fertige Produkt (70) wird entnommen und die Abtrenn- und Anbindeeinheit (30, 40) wird zu einem benachbarten neuen Grundkörper (20) bewegt, wobei der Faserstrang (12) vor seinem freien Ende (14) in der Halteeinrichtung (40) eingespannt bleibt, so dass der Produklionsprozess ohne Unterbrechungen oder Eingriffe von Hand weitergeht;
f) eventuell am Abstreifer (47) der Abtrenn- und Anbindeeinheit (30;40) befindliche Harzreste werden auf der Oberfläche eines neuen unbewickelten Grundkörpers (20) abgestrichen, z.B. auf einem Kunststoffbehälter;
g) der von der Halteeinrichtung (40) gehaltenen Faserstrang (12) wird mit seinem freien Ende (14) in das Harz auf der Oberfläche des neuen Grundkörpers (20) eingelegt;
h) **durch** Öffnen der Halteeinrichtung (50) und definiertes Rückwärtsdrehen des neuen Grundkörpers (20) um einen vorgegebenen Winkel wird das freie Faserstrang-Ende (14) auf der Oberfläche des neuen Grundkörpers (20) festgelegt, bevorzugt mittels eines Abstreifers (38), z.B. einer in Faserrichtung über das freie Faserstrang-Ende (18) streichenden Lippe;
i) nach erfolgter Drehrichtungsänderung wird das freie Faserstrang-Ende (14) ohne Fadenspannung wenigstens einmal in Wickelrichtung um den Grundkörper (20) geführt und bei Bedarf mit einer über die Oberfläche samt Fasern streichende Lippe (38) festgelegt:
j) nach der Anfangsbefestigung wird die Abtrenn- und Anbindeeinheit (30, 40) aus dem Anwendungsbereich in der Filament-Winding-Anlage (10) herausgeschwenkt, damit der eigentliche Wickelvorgang beginnen kann;
k) Nach dessen Beendigung beginnt der nächste Zyklus mit Verfahrensschritt a).

## Claims

1. Severing and fastening device for composite fibres, rovings, and the like in a filament-winding-machine (10) for the manufacture of rotationally-symmetrical packages (70),
- with a feeding installation (11) for a matrix material-impregnated fibre hank (12) that is wound up on a rotating basic body, and
- with at least one severing installation (30) to cut through the fibre hank (12) and to push its body-side hank end against the completed package (70),
**characterized in that** it has at least one fastening installation (50) to fasten the loose fibre hank end (14) to a neighboring new, plain basic body (20).

2. Device according to Claim 1, **characterized in that** the severing installation (30) has at least one cutting installation (45).

3. Device according to Claim 1 or 2, **characterized in that** the severing installation (30) has at least one elastic stripper (47), for example in the form of a rubber or plastic lip drivable over the peripheral side of the package (20).

4. Device according to Claim 2 or 3, **characterized in that** the stripper (47) is arranged about rectangular to the cutting direction of the cutting installation (45).

5. Device according to one of the Claims 2 to 4, **characterized in that** the movements of the cutting unit (45) and the stripper (47) are coupled synchronically to the movement of the package (20).

6. Device according to one of the Claims 1 to 5, **characterized in that** the severing installation (30) and the fastening installation (50) can be swung into and out of the operative range of the filament-winding-machine.

7. Device according to one of the Claims 1 to 6, **characterized in that** the severing and fastening installations (30, 50) form a constructional unit.

8. Device according to one of the Claims 1 to 6, **characterized in that** the fastening installation (50) is swing-connected with the severing installation (30).

9. Device according to Claim 7 or 8, **characterized in that** the fastening installation (50) has at least one more elastic stripper, for example in the form of a rubber or plastic lip drivable over the peripheral side of the package (20).

10. Device according to Claim 9, **characterized in that** the movement of the additional stripper is coupled synchronically to the movement of the package (20)

11. Device according to one of the Claims 1 to 10, **characterized in that** a gripping installation (40) is provided for by which the fibre hank (12) is fixable before being cut off.

12. Device according to Claim 11, **characterized in that** the gripping installation (40) can be swung into and out of the operative range of the filament-winding-machine (10).

13. Device according to one of the Claims 1 to 12, **characterized in that** the fixing installation (40) forms a constructional unit with the severing installation (30) and/or the fastening installation (50).

14. Procedure to sever and fasten composite fibres, rovings, and the like in a filament-winding-machine (10), where at least on impregnated fibre hank (12) after having been wound up on a rotating basic body (20) is being cut through by a cutting installation (30), with the cut-off fibres (13) of the completed package (70) being fixed to the latter and with the fibre hank being passed on to a neighboring new basic body (20) and fastened to the same with its loose fibre hank end (14).

15. Procedure according to Claim 14, **characterized in that** the body-side end (13) of the cut-off fibre hank (12) is brushed on to the completed package (70) in fibre direction and/or in winding direction.

16. Procedure according to Claim 14 or 15, **characterized in that** at laying on respectively brushing on the cut-off fibres the completed package (70) is at a defined angle turned on in winding direction.

17. Procedure according to one of the Claims 14 to 16, **characterized in that** the fibre hank (12) is being fastened to the peripheral surface of the basic body (20).

18. Procedure according to Claim 17 or 18, **characterized in that** the fibre hank (12) is being laid on the basic body (20) opposite to the winding direction of the same.

19. Procedure according to one of the Claims 14 to 18, **characterized in that** at fastening the fibre hank (12) the basic body (20) is at a defined angle been turned on opposite to the winding direction.

20. Procedure according to one of the Claims 14 to 19, **characterized in that** after the fastening of the fibre hank (12) the basic body 12) takes up at least one complete winding of the fibre hank (12) without pretension.

21. Procedure according to one of the Claims 14 to 20, **characterized in that** the deposition of the fibre hank (12) on the basic body (20) is done along geodetic lines.

22. Procedure according to one of the Claims 14 to 21, **characterized in that** the fibre hank (12) is being fastened near the polar caps (24) of the basic body (20).

23. Procedure according to Claim 22, **characterized in that** the loose end (14) of the fibre hank is being fixed in the fastening installation.

24. Procedure according to one of the Claims 14 to 23, **characterized in that** before being cut off the fibre hank (12) is being caught by a fixing installation (40) and being fixed in cutting position.

25. Procedure according to one of the Claims 14 to 24, **characterized in that** a continuous fibre hank (12) is being caught by a combined severing- and fastening unit (30, 40, 50) while maintaining the fibre tension, being cut through at a completed packing (70) and fastened to a neighboring new basic body (20).

26. Procedure to sever and fasten composite fibres, rovings, and the like in a filament-winding-machine (10) according to one of the Claims 14 to 25, **characterized by** the following procedure steps:
a) upon completion of a package product (70) a severing and fastening unit is being brought, for example swung into operation position;
b) fibres coming from the completed package product (70) are by means of a holding installation (40) caught and clamped without the fibres of the fibre hank (12) losing their pretension;
c) a fixed blade or a driven knife (46) cuts through the fibres between the package product (70) and the holding installation (40);
d) the cut-through fibres projecting from the package product (70) are being pushed flatly by a stripper (47) against the product (70), especially brushed on, respectively onto it;
e) the completed product (70) is being removed and the severing and fastening unit (30,40) moved to a neighboring new basic body (20), with the fibre hank (12) still being clamped before its loose end (14) in the holding installation (40) to continue the production process without interruption or manual operation;
f) possible resin residues at the stripper (47) of the severing and fastening unit (30;40) are being brushed off on the surface of a new plain basic body (20), e. g. a plastic container;
g) the loose end (14) of the fibre hank (12) fixed by the holding installation (40) is being laid in the resin on the surface of the new basic body (20);
h) by opening the holding installation (40) and a defined backward turning of the new basic body (20) at a given angle the loose fibre hank end (14) fixed on the surface of the new basic body (20), preferably by a stripper (47), e. g. a lip running in the fibre direction over the loose fibre hank end (14);
i) after the completed turning direction change the loose fibre hank end (14) is without thread tension being wound at least one time in winding direction around the basic body (20) and, if required, fixed by a lip (47) running over the surface and the fibres;
j) after this initial fixing the severing and fastening unit (30, 50) is being swung out of the operative range of the filament-winding-machine (10) to start the actual winding process;
k) upon its termination, the next cycle starts with procedure step a).

## Revendications

1. Dispositif de détachement et de rattachement des fibres composites, des paquets de fibres, et pareils dans un enrouleur de filaments (10) pour la production des pelotes à symétrie de révolution (70).
- avec une installation d'alimentation (11) pour un boyau de fibre (12) imprégné de mélange-maître qui est enroulé sur un corps de base (20) actionné à rotation, et
- avec au moins une installation de séparation (30) pour couper le boyau de fibre (12) et pour mettre son bout de boyau (13) situé au côté du corps contre la pelote achevée (70),
**caractérisée en ce qu'**au moins une installation de rattachement est présente pour rattacher le bout libre du boyau de fibre (14) à un nouveau corps de base (20) avoisinant et non enroulé.

2. Dispositif selon la Revendication 1, **caractérisé en ce que** installation de séparation présente au moins une installation de coupage (45).

3. Dispositif selon la Revendication 1 ou 2, **caractérisée en ce que** l'installation de séparation (30) présente au moins un racloir élastique (47), par exemple sous forme d'une lèvre en caoutchouc ou en plastique, et qui peut être mené sur la pelote (20) de sa côté périphérique.

4. Dispositif selon la Revendication 2 ou 3, **caractérisé en ce que** le racloir (47) est arrangé approximativement rectangulairement à la direction de coupe de l'installation de coupage (45).

5. Dispositif selon une des Revendications 2 à 4, **caractérisé en ce que** le mouvement de l'installation de coupage (45) et du racloir (47) sont en couplage synchronisé avec le mouvement de la pelote (20).

6. Dispositif selon une des Revendications 1 à 5, **caractérisée en ce que** l'installation de séparation (30) et l'installation de rattachement (50) peuvent être tournées vers le dedans et le dehors de la zone d'action de l'enrouleur de filaments.

7. Dispositif selon une des Revendications 1 à 6, **caractérisé en ce que** les installations de séparation et de rattachement (30, 50) forment une unité de construction.

8. Dispositif selon une des Revendications 1 à 6, **caractérisée en ce que** l'installation de rattachement (50) est liée de manière tournante à l'installation de séparation (30).

9. Dispositif selon la Revendication 7 ou 8, **caractérisée en ce que** l'installation de rattachement (50) présente au moins un racloir élastique de plus, par exemple sous forme d'une lèvre en caoutchouc ou en plastique et qui peut être mené sur la pelote (20) de sa côté périphérique.

10. Dispositif selon la Revendication 9, **caractérisée en ce que** le mouvement du racloir de plus est en couplage synchronisé avec le mouvement de la pelote (20).

11. Dispositif selon une des Revendications 1 à 10, **caractérisé en ce qu'**une installation de prise (40) est prévue par laquelle le boyau de fibre (12) est fixable avant son découpage.

12. Dispositif selon la Revendication 11, **caractérisée en ce que** l'installation de fixation (40) peut être tournée vers le dedans et le dehors de la zone d'action de l'enrouleur de filaments (10).

13. Dispositif selon une des Revendications 1 à 12, **caractérisée en ce que** l'installation de fixation (40) forme avec l'installation de séparation (30) et/ou l'installation de rattachement (50) une unité de construction.

14. Procédé de détachement et de rattachement des fibres composites, des paquets de fibres, et pareils dans un enrouleur de filaments (10) avec au moins un boyau de fibre (12) imprégné qui, après avoir enroulé un corps de base (20) actionné à rotation (20), est coupé par une installation de séparation (30), et les fibres coupées (13) de la pelote achevée (70) ayant fixées à celle-ci, pendant que le boyau de fibre (12) est passé à un nouveau corps de base (20) avoisinant et rattaché à celui-ci avec son libre bout de boyau de fibre.

15. Procédé selon la Revendication 14, **caractérisé en ce que** le bout (13) du boyau de fibre (12) découpé qui est situé au côté du corps est passé sur la pelote achevée en direction des fibres et/ou en direction de l'enroulement.

16. Procédé selon la Revendication 14 or 15, **caractérisé en ce que** la pelote achevée (70) est, pendant que les fibres coupées sont mises, respectivement pressées contre celle-ci, tournée d'avance d'un angle défini vers la direction d'enroulement.

17. Procédé selon une des Revendications 14 à 16, **caractérisé en ce que** le boyau de fibre (12) est rattaché sur la surface périphérique du corps de base (20).

18. Procédé selon une des Revendications 14 à 17, **caractérisé en ce que** le boyau de fibre (12) est mis contre le corps de base (20) à contresens de la direction d'enroulement de celui-ci.

19. Procédé selon la Revendication 17 ou 18, **caractérisé en ce que** pendant le rattachement du boyau de fibre (12) le corps de base (20) est tourné d'un angle défini à contresens de la direction d'enroulement

20. Procédé selon une des Revendications 14 à 19, **caractérisé en ce que** le corps de base (20) prend après le rattachement du boyau de fibre (12) au moins un tour complète d'enroulement sans prétension.

21. Procédé selon une des Revendications 14 à 20, **caractérisé en ce que** la dépose du boyau de fibre (12) sur le corps de base (20) est faite le long des lignes géodésiques.

22. Procédé selon une des Revendications 14 à 21, **caractérisé en ce que** le boyau de fibre (12) est rattaché près des pôles (24) du corps de base (20).

23. Procédé selon la Revendication 22, **caractérisé en ce que** le bout libre (14) du boyau de fibre est fixé dans l'installation de rattachement (50).

24. Procédé selon une des Revendications 14 à 23, **caractérisé en ce que** le boyau de fibre (12) est avant d'être détaché pris par une installation de fixation (40) et fixé en position de coupage.

25. Procédé selon une des Revendications 14 à 24, **caractérisé en ce qu'**un boyau de fibre continue (12) est pris par une unité de détachement et de rattachement (30, 40, 50) en gardant la tension de fibre, est coupé à une pelote achevée (70), et rattaché à un nouveau corps de base (20) avoisinant.

26. Procédé de détachement et de rattachement des fibres composites, des paquets de fibre, et pareils dans un enrouleur de filaments (10) selon une des Revendications 14 à 25, **caractérisé par** les parties de procédé suivantes :
a) après l'achèvement d'un produit de pelote (70) une unité de détachement et de rattachement est mise en position, par exemple en la tournant vers le dedans ;
b) des fibres venant du produit de pelote achevé (70) sont par le moyen d'une installation de retenue (40) prises et serrées, sans que les fibres du boyau de fibres (12) perdent leur prétension ;
c) une lame à cran d'arrêt ou un couteau actionné (46) coupe les fibres entre le produit de pelote (70) et l'installation de retenue (40) ;
d) les fibres coupées et s'avançant du produit de pelote (70) sont par un racloir mises de manière plaine contre le produit (70), en particulier passées sur ou contre celui-ci ;
e) le produit achevé (70) est retiré et l'unité de détachement et de rattachement (30, 40) est placée à un nouvel corps de base (20) avoisinant, le boyau de fibres (12) restant encore serré avant son bout libre (14) dans l'installation de retenue (40) pour continuer le procédé de production sans interruption ou opération manuelle ;
f) des possibles résidus de résine au racloir (47) de l'unité de détachement et de rattachement (30 ; 40) sont raclés sur le surface d'un nouveau corps de base non enroulé (20), par exemple un récipient en plastique ;
g) le boyau de fibre (12) fixé par l'installation de retenue (40) est avec son bout libre (14) mis dans le résine sur la surface du nouveau corps de base (20) ;
h) en ouvrant l'installation de retenue (40) et en tournant en arrière de manière définie le nouveau corps de base (20) à un angle donné, le bout libre du boyau de fibre (14) est fixé sur la surface du nouveau corps de base (20), de préférence par un racloir (47), par exemple une lèvre passant en direction des fibres sur le bout libre du boyau de fibre (14) ;
i) après le changement du sens rotatif, le bout libre du boyau de fibre (14) est sans tension de fibre roulé au moins une fois autour du corps de base (20) en direction d'enroulement et, si nécessaire, fixé par une lèvre (47) passant sur la surface et les fibres ;
j) après cette fixation initiale l'unité de détachement et de rattachement (30, 50) est tourné vers le dehors de la zone d'action dans l'enrouleur de filaments (10) pour commencer le propre procédé d'enroulement ;
k) après sa terminaison, le cycle suivant commence avec la partie de procédé a).
